# EUROPÄISCHE PATENTSCHRIFT

(11) **EP 4 309 489 B1**
(45) Veröffentlichungstag und Bekanntmachung des Hinweises auf die Patenterteilung: **02.07.2025**
(21) Anmeldenummer: 23170520.3
(22) Anmeldetag: 28.04.2023
(51) Int. Cl.: A01D 61/02

(54) **BANDSCHNEIDWERK**
DRAPER HEADER
COUPEUSE DE BANDE

(30) Priorität: 21.07.2022 DE 102022118227
(43) Veröffentlichungstag der Anmeldung: 24.01.2024
(73) Patentinhaber: CLAAS Selbstfahrende Erntemaschinen GmbH, 33428 Harsewinkel (DE)
(72) Erfinder: Zelenyánszki, Tamás, 5600 Békéscsaba (HU); Füchtling, Christian, 48317 Drenstein Rinkerode (DE)
(74) Vertreter: CLAAS Gruppe

(56) Entgegenhaltungen:
- EP-A1- 2 700 295
- EP-A1- 3 153 003
- WO-A1-2020/050958
- US-A1- 2004 148 919

## Beschreibung

Die vorliegende Erfindung betrifft ein Bandschneidwerk gemäß dem Oberbegriff des Anspruches 1.

Bandschneidwerke umfassen einen Rahmen mit einem zumindest ein endlos umlaufendes Mittenband aufweisenden Mittensegment und zwei jeweils zumindest ein lateral förderndes, endlos umlaufendes Seitenband aufweisenden Seitensegmente sowie einen Messerbalken. Der Messerbalken kann starr oder flexibel ausgeführt sein. Die Seitenbänder sowie das Mittenband sind, in Fahrtrichtung gesehen, unter einem Winkel zum Messerbalken geneigt angeordnet. Diese Anordnung hat zur Folge, das Körner, die sich bei der Aufnahme des Ernteguts aus diesem herausgelöst haben, auf den Seitenbändern als auch dem Mittenband zu deren Vorderkante in Richtung des Messerbalkens rollen. Sowohl die Seitenbänder als auch das Mittenband sind auf ihrer gutfördernden Bandoberseite mit äquidistant angeordneten Förderrippen versehen. Die Förderrippen der Seitenbänder sowie des Mittenbandes erstrecken sich jeweils senkrecht zur jeweiligen Förderrichtung. Während die Förderrippen der Seitenbänder parallel zur Förderrichtung des Mittenbandes verlaufen, verlaufen die Förderrippen des Mittenbandes parallel zur Förderrichtung des jeweiligen Seitenbandes. Dies hat den Effekt, dass Körner, insbesondere von Erntegutarten mit kleiner Korngröße wie beispielsweise Raps, welche sich in den seitlichen Randbereichen des Mittenbandes befinden, von den Förderrippen der Seitenbänder erfasst und unterhalb derselben gelangen können, was zu ungewollten Erntegutverlusten führt. Ein weiterer Aspekt ist, dass bei einem Bandschneidwerk, welches mit flexiblem Messerbalken ausgeführt ist, dieses über seine Arbeitsbreite gesehen aufgrund der Flexibilität von Messerbalken und Seitenbändern in der Regel keine nahezu waagerechte Position einnimmt. Dies führt dazu, dass Körner im Bereich einer im Rahmen befindlichen Öffnung in äußeren Eckbereichen des Mittenbandes zwischen bestehende Spalte zum Rahmen gelangen kann. Dies führt dazu, dass die Körner zermahlen werden, wodurch sich Material ansammelt. Insbesondere im Fall von Raps als Erntegut führt dies zudem zu einer Verunreinigung mit Öl, was den Betrieb des Mittenbandes durch dadurch verursachten Schlupf negativ beeinflussen kann. Weiterhin ist dieser Bereich sehr unzugänglich, was den Wartungs- und Reinigungsaufwand erheblich erhöht.

Aus der US 2004/0148919 A1 ist ein Bandschneidwerk bekannt, dessen Mittenband mit in Förderrichtung gesehen paarweise nebeneinander angeordneten Förderrippen versehen ist, die zur Mitte des Förderbandes hin eine Neigung aufweisen. Zwischen den benachbarten Förderrippen ist ein Spalt, durch welchen Erntegut in Richtung des Messerbalkens zurückrollen kann. Die Neigung der Förderrippen liegt unterhalb von 15°, so dass der Effekt, Körner von den den Seitenbändern zugewandten Randbereichen des Mittenbandes zur Mitte hin abzulenken, sehr gering ist.

Ausgehend vom vorstehend genannten Stand der Technik liegt der Erfindung die Aufgabe zugrunde, ein Bandschneidwerk der eingangs genannten Art weiterzubilden, welches die Nachteile des Standes der Technik vermeidet und sich insbesondere durch eine funktional verbesserte Gutführung und verlustärmere Gutförderung durch das Mittenband auszeichnet.

Diese Aufgabe wird durch ein Bandschneidwerk mit den Merkmalen des unabhängigen Patentanspruchs 1 gelöst. Vorteilhafte Ausführungsformen und Weiterbildungen sind den hiervon abhängigen Ansprüchen zu entnehmen.

Gemäß dem Anspruch 1 wird ein Bandschneidwerk vorgeschlagen, welches einen Rahmen mit einem zumindest ein endlos umlaufendes Mittenband aufweisendes Mittensegment und zwei jeweils zumindest ein lateral förderndes, endlos umlaufendes Seitenband aufweisenden Seitensegmenten umfasst, wobei das Mittenband sowie die Seitenbänder auf ihrer gutfördernden Bandoberseite jeweils mit äquidistant angeordneten Förderrippen versehen sind, welche senkrecht zur jeweiligen Förderrichtung von Mittenband bzw. Seitenbändern angeordnet sind, sowie einen sich im Wesentlichen über die Breite des Bandschneidwerkes erstreckenden Messerbalken. Erfindungsgemäß ist vorgesehen, dass jede Förderrippe des Mittenbandes jeweils mit parallel zu äußeren Rändern des Mittenbandes verlaufenden Seitenrippen ausgeführt ist, die durch einen geneigten Übergangsabschnitt unmittelbar an ein äußeres Ende der jeweiligen Förderrippe angebunden sind, wobei sich die Seitenrippen jeweils abschnittsweise in Förderrichtung des Mittenbandes erstrecken.

Die sich in Förderrichtung des Mittenbandes erstreckenden Seitenrippen tragen dazu bei, dass das Erfassen von im äußersten Randbereich des Mittenbandes befindlichen Erntegutes von den Förderrippen der Seitenbänder und somit das Fördern unter das Seitenband verhindert oder zumindest minimiert wird. Hierzu bilden die beiden Seitenrippen Barrieren, welche insbesondere in hügeligen Gebieten dazu beitragen, insbesondere aus dem Erntegut gelöste Körner auf dem Mittenband zu halten. Die Seitenrippen verlaufen parallel zu den Förderrippen der Seitenbänder. Durch den jeweiligen geneigten Übergangsabschnitt zwischen den Seitenrippen und der Förderrippe wird erreicht, dass sich innerhalb eines beidseitig zwischen den Seitenbändern und dem Mittenband ausbildender Überlappungsbereiches befindliches Erntegut in Richtung des Mittenbereichs des Mittenbandes bewegen kann. Dieser Effekt wird durch die Neigung des Mittenbandes in Richtung des Messerbalkens begünstigt.

Insbesondere können die Seitenrippen unmittelbar benachbart zu äußeren Rändern des Mittenbandes, zu denen die Seitenrippen parallel verlaufen, angeordnet sein. Hierzu kann ein lateraler Abstand der jeweiligen Seitenrippe zum äußeren Rand des Mittenbandes im Wesentlichen der Breite der Seitenrippe entsprechen.

Bevorzugt kann der jeweilige Übergangsabschnitt zwischen der Förderrippe und den Seitenrippen unter einem Winkel im Bereich von 40° bis 50°, besonders bevorzugt unter einem Winkel von im Wesentlichen 45°, geneigt ausgeführt sein. Die Neigung des jeweiligen Übergangsabschnitts zwischen der Förderrippe und den Seitenrippen unter einem Winkel im Bereich von 40° bis 50° bewirkt ein im Wesentlichen gleichmäßiges, kontinuierliches Abführen von Erntegut, welches sich an den Seitenrippen anlagert. Dabei wird durch den Winkel von insbesondere 45° eine ungewollte Anhäufung von Erntegut unmittelbar um Fuß des Übergangsabschnitts zur Förderrippe hin durch zu rasches Nachrutschen von Erntegut vermieden. Ein weiterer sich aus der geneigten Ausführung der Übergangsabschnitte ergebender Effekt besteht darin, dass ein geringer Anteil an Erntegut in die äußeren Randbereiche einer als Einzugswalze ausgeführten Einzugsvorrichtung des Bandschneidwerks gelangen kann. Die Einzugsvorrichtung führt das von den endlos umlaufenden Seitenbändern dem Mittensegment seitlich zugeführte Erntegut einer in dem Rahmen des Mittensegments vorgesehenen, hinter der Einzugswalze befindlichen Öffnung zu. In den äußeren Randbereichen der Einzugswalze ist die Gutannahme aufgrund der sich zu den äußeren Enden hin verjüngenden Bauform nicht im gleichem Maße gegeben wie über die übrige Breite der Einzugswalze. Die geneigte Ausführung der Übergangsabschnitte zwischen der Förderrippe und den Seitenrippen verbessert die Gutführung und Gutannahme durch die Einzugswalze, indem das Erntegut von den Randbereichen der Einzugswalze weggelenkt wird.

Gemäß einer bevorzugten Weiterbildung kann der jeweilige Übergangsabschnitt an seinen der Förderrippe und der jeweiligen Seitenrippe zugewandten Enden einen bogenförmigen Abschnitt aufweisen, der in einen gerade verlaufenden Mittenabschnitt übergeht.

Hierbei kann der jeweilige Übergangsabschnitt einstückig ausgeführt sein. Denkbar ist aber auch eine mehrteilige Ausgestaltung des jeweiligen Übergangsabschnitts.

Dabei kann der gerade verlaufende Mittenabschnitt eine Länge aufweisen, die mindestens 40 % eines zwischen Förderrippe und jeweiliger Seitenrippe durch den jeweiligen Übergangsabschnitt zu überbrückenden Abstands entspricht.

Weiterhin können der jeweilige Übergangsabschnitt und die jeweilige Seitenrippe aus einem gummielastischen Material bestehen. Das für die Übergangsabschnitte und die Seitenrippen verwendete Material kann dabei von dem für die Förderrippe verwendeten Material abweichen. Im Unterschied zu den Förderrippen auf dem Mittenband, welche parallel zur Förderrichtung verlaufen und bei einer Umlenkung um jeweils eine innenliegende Antriebs- und Umlenkrolle des Förderbandes nahezu keine radiale Krümmung und damit verbundene Dehnung erfahren, werden die Übergangsabschnitte und die Seitenrippen beim Passieren der Antriebs- und Umlenkrolle radial gedehnt bzw. überstreckt. Entsprechend ist eine geeignete Auswahl des Materials für die Übergangsabschnitte und die Seitenrippen vorteilhaft, um übermäßigen Verschleiß zu vermeiden.

Gemäß einer bevorzugten Weiterbildung kann, ausgehend von der gutfördernden Bandoberseite, die vertikale Erstreckung des jeweiligen Übergangsabschnitts und der jeweiligen Seitenrippe geringer als die der Förderrippe sein. Die Förderrippen des Mittenbandes weisen in der Regel eine Höhe auf, welche der Höhe der Förderrippen auf den Seitenbändern entspricht. Durch die geringere Höhe der Übergangsabschnitte und der Seitenrippen wird verhindert, dass diese mit den Förderrippen der Seitenbänder in Berührung kommen.

Bevorzugt können der jeweilige Übergangsabschnitt und die jeweilige Seitenrippe einen im Wesentlichen quaderförmigen oder trapezförmigen Querschnitt aufweisen.

Das Bandschneidwerk kann einen starr oder flexibel ausgeführten Messerbalken aufweisen. Die erfindungsgemäße Ausgestaltung des Mittenbandes für das Bandschneidwerk ist unabhängig von der Ausführung des Messerbalkens.

Die vorliegende Erfindung wird nachstehend anhand eines in den Zeichnungen dargestellten Ausführungsbeispieles näher erläutert.

Es zeigen:
- Fig. 1: exemplarisch und schematisch eine Darstellung eines Bandschneidwerkes;
- Fig. 2: exemplarisch und schematisch eine Teilansicht eines Messerbalkens sowie eines dahinter angeordneten Mittensegmentes des Bandschneidwerkes;
- Fig. 3: exemplarisch und schematisch eine Teilansicht eines Mittenbandes des Mittensegments gemäß Fig. 2; und
- Fig. 4: exemplarisch und schematisch eine Teilansicht des Mittensegmentes in einer Ansicht von oben.

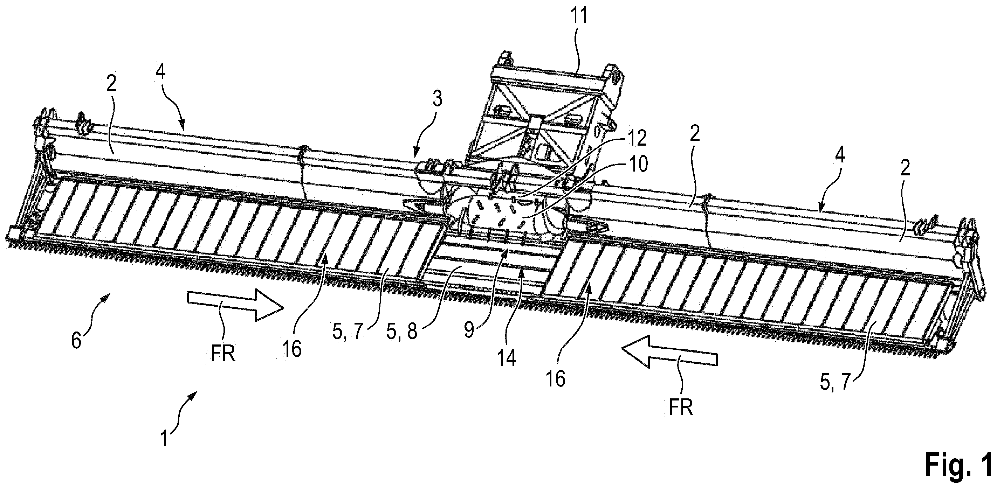

Fig. 1 zeigt exemplarisch und schematisch eine Darstellung eines Bandschneidwerkes 1. Das Bandschneidwerk 1 umfasst ein Mittensegment 3 und mindestens zwei benachbart zu dem Mittensegment 3 angeordnete Seitensegmente 4. Das Bandschneidwerk 1 weist einen Rahmen 2 auf. Der Rahmen 2 kann segmentiert ausgeführt sein. Dabei können das Mittensegment 3 und die Seitensegmente 4 jeweils einzelne Rahmensegmente aufweisen, an denen diese angeordnet sind. Die Rahmensegmente können zusammen den segmentierten Rahmen 2 bilden. Zwei äußere Rahmensegmente können schwenkbar an einem inneren Rahmensegment angeordnet sein.

An dem Mittensegment 3 und den Seitensegmenten 4 ist auf der dem Rahmen 2 gegenüberliegenden Vorderseite des Bandschneidwerkes 1 ein Messerbalken 6 angeordnet, der sich im Wesentlichen über die gesamte Breite des Bandschneidwerkes 1 erstreckt.

Der Messerbalken 6 kann als starrer Messerbalken ausgeführt sein oder als bodenkopierender flexibler Messerbalken. Bei einer Ausführung als bodenkopierender flexibler Messerbalken 6 kann dieser an schwenkbar an dem Rahmen 2 angelenkten Tragarmen angeordnet sein und kann somit aufgrund von Bodenunebenheiten eine zumindest abschnittsweise Auslenkung in vertikaler Richtung um eine Horizontallage erfahren. Dabei kann der als bodenkopierender flexibler Messerbalken ausgeführte Messerbalken 6 in positiver Richtung nach oben vom Boden weg und in negativer Richtung nach unten zum Boden hin ausgelenkt werden.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Seitenband 7 ausgeführt ist. Die endlos umlaufenden Seitenbänder 7 der Seitensegmente 4 sind jeweils benachbart zu dem Mittensegment 3 angeordnet, um von dem Messerbalken 6 abgeschnittenes Erntegut seitwärts in einer Förderrichtung FR zum Mittensegment 3 zu transportieren und einer Einzugsvorrichtung 9 zuzuführen. Die Seitenbänder 7 können dazu eingerichtet sein, einer Bewegung des als bodenkopierend ausgeführten flexiblen Messerbalkens 6 zu folgen.

Das Mittensegment 3 umfasst ebenfalls eine als zumindest ein endlos umlaufendes Mittenband 8 ausgebildete Fördervorrichtung 5. Das zumindest eine Mittenband 8 des Mittenabschnittes 3 fördert dabei quer zur Förderrichtung FR der Seitenbänder 7 der Seitensegmente 4. Die Einzugsvorrichtung 9 ist als eine antreibbare Einzugswalze 10 ausgeführt. Die Einzugsvorrichtung 9 führt das von den endlos umlaufenden Seitenbändern 7 dem Mittenabschnitt 3 seitlich zugeführte Erntegut einer in dem Rahmen 2 des Mittensegments 3 vorgesehenen, hinter der Einzugswalze 10 befindlichen Öffnung 12 zu, durch welche das aufgenommene Erntegut durch einen an einem nicht dargestellten Mähdrescher befindlichen Einzugskanal 11, an dem das Bandschneidwerk 1 lösbar befestigt ist, dem Mähdrescher zur weiteren Verarbeitung zugeführt wird. Das Mittenband 8 sowie die Seitenbänder 7 sind auf ihrer gutfördernden Bandoberseite jeweils mit äquidistant angeordneten Förderrippen 14 bzw. 16 versehen, welche senkrecht zur jeweiligen Förderrichtung FR von Mittenband 8 bzw. Seitenbändern 7 angeordnet sind.

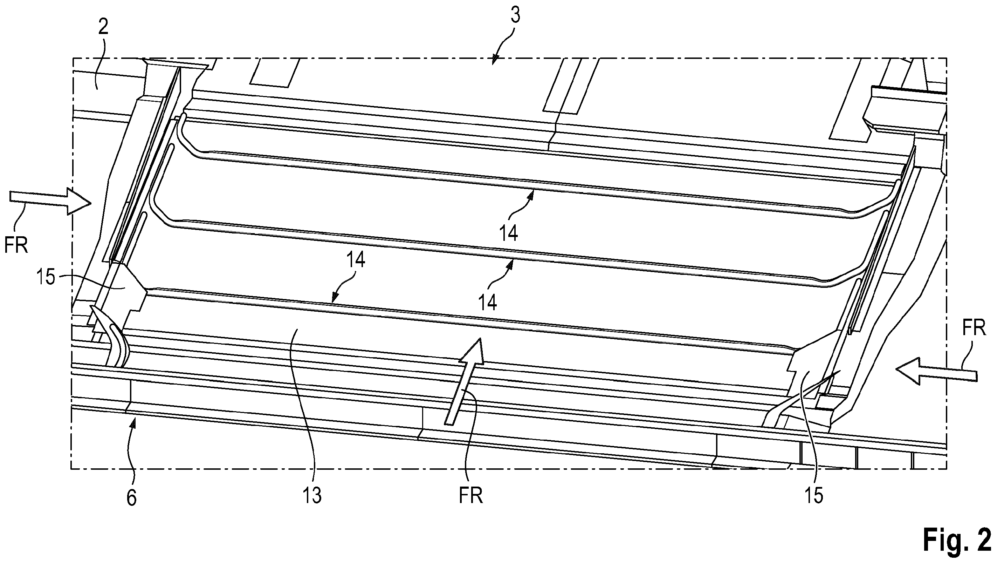

Fig. 2 zeigt exemplarisch und schematisch eine Teilansicht des Messerbalkens 6 sowie des dahinter angeordneten Mittensegmentes 3 des Bandschneidwerkes 1. Der Messerbalken 6 ist ohne die daran angeordneten Messer vereinfacht dargestellt. Weiterhin sind aus Vereinfachungsgründen die Seitenbänder 7 sowie weitere Komponenten der Seitensegmente 4 in Fig. 2 nicht dargestellt.

Bedingt durch den gegenüber den Seitenbändern 7 größeren Abstand des Mittenbandes 8 zum Messerbalken 6 bildet sich zwischen dem Messerbalken 6 und dem Mittenband 8 ein Übergangsbereich 13 aus, in welchem das Erntegut dem Mittenband 8 vor diesem zugeführt wird. Die äquidistant angeordneten Förderrippen 14 des Mittenbandes sind parallel zum Messerbalken 6 verlaufend angeordnet. In dem Übergangsbereich 13 können Gutleitbleche oder dergleichen angeordnet sein, welche der passiven Zuführung des geschnittenen Erntegutes zum Mittenband 8 dienen. Hinter dem Messerbalken 6 sind Leitbleche 15 angeordnet, welche unter einem Winkel zum Übergangsbereich 13 geneigt angeordnet sind. Die Leitbleche 15 überlappen den Übergangsbereich 13 in Förderrichtung FR des Mittenbandes 8 gesehen abschnittsweise. Die Leitbleche 15 dienen dazu, vom Mittensegment 3 aufgenommenes Erntegut in Richtung des Mittenbandes 8 zu lenken sowie um zu verhindern, dass Erntegut unter die Seitenbänder 7 der Seitensegmente 4 gelangt, welche die Leitbleche 15 abschnittsweise überragen.

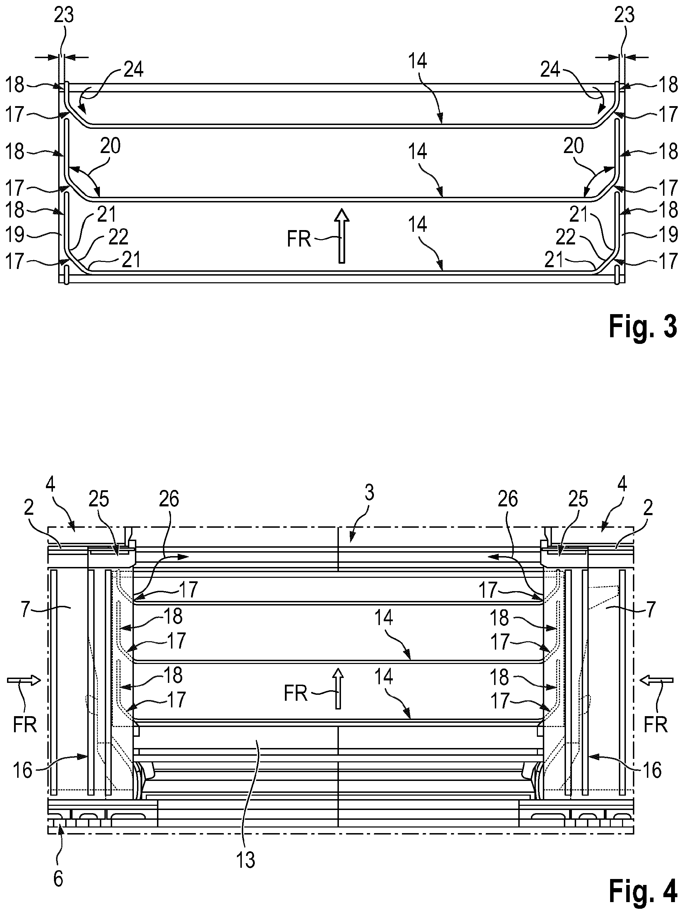

Die Darstellung in Fig. 3 zeigt exemplarisch und schematisch eine Teilansicht des Mittenbandes 8 des Mittensegmentes 3 gemäß Fig. 2. Jede Förderrippe 14 des Mittenbandes 8 ist jeweils mit parallel zu äußeren Rändern 19 des Mittenbandes 8 verlaufenden Seitenrippen 18 ausgeführt, die durch einen geneigten Übergangsabschnitt 17 unmittelbar an ein äußeres Ende der jeweiligen Förderrippe 14 angebunden sind, wobei sich die Seitenrippen 18 jeweils abschnittsweise in und parallel zur Förderrichtung FR des Mittenbandes 8 erstrecken.

Die Seitenrippen 18 sind unmittelbar benachbart zu den äußeren Rändern 19 des Mittenbandes 8, zu denen die Seitenrippen 18 parallel verlaufen, angeordnet. Hierzu entspricht ein lateraler Abstand 23 der jeweiligen Seitenrippe 18 zum unmittelbar benachbarten äußeren Rand 19 des Mittenbandes 8 im Wesentlichen der Breite der Seitenrippe 18.

Der jeweilige Übergangsabschnitt 17 zwischen der Förderrippe 14 und den Seitenrippen 18 ist unter einem Winkel 20 im Bereich von 40° bis 50° geneigt angeordnet. Bevorzugt ist der jeweilige Übergangsabschnitt 17 unter einem Winkel 20 von im Wesentlichen 45°, geneigt angeordnet.

Der jeweilige Übergangsabschnitt 17 weist an seinen der Förderrippe 14 und der jeweiligen Seitenrippe 18 zugewandten Enden einen bogenförmigen Abschnitt 21 auf, der in einen gerade verlaufenden Mittenabschnitt 22 übergeht.

Die Seitenrippen 18 verhindern oder reduzieren zumindest den Anteil an Erntegut, insbesondere an bereits herausgelöstem Korn, welcher seitlich vom Mittenband 8 rollen kann. Dadurch gelangt weniger oder nahezu kein Erntegut unter die Seitenbänder 7, was deren Betrieb beeinträchtigt. Dabei wirken der jeweilige Übergangsabschnitt 17 und sich daran anschließende Seitenrippe 18 als Barriere für das Erntegut respektive das herausgelöste Korn.

Die Neigung des Übergangsabschnitts 17 bewirkt eine Umlenkung des Ernteguts in Richtung des Mittenbereichs des Mittenbandes 8, welche durch einen Pfeil 24 angedeutet ist. Diese Umlenkung ist insbesondere in hügeligem Terrain vorteilhaft. Aufgrund einer Neigung des Bandschneidwerkes 1 quer zur Fahrtrichtung FR bewegt sich Erntegut zur tieferliegenden Seite des Mittenbandes 8 bis an die Seitenrippe 18. Zusätzlich weist das Mittenband 8 eine Neigung in Fahrtrichtung FR auf, so dass das der Einzugswalze 10 zugewandte Ende des Mittenbandes 8 höher liegt als das dem Messerbalken 6 zugewandte Ende. In ihrer Kombination bewirken die Neigungen in Verbindung mit dem bevorzugt um 45° geneigten Übergangsabschnitts 17 eine Umlenkung hin zur horizontal verlaufenden Förderrippe 14 des Mittenbandes 8.

In Fig. 4 ist exemplarisch und schematisch eine Teilansicht des Mittensegmentes 3 von oben dargestellt. Die teilweise sichtbaren Seitenbänder 7 sind transparent dargestellt, um zu veranschaulichen, wie die jeweiligen Übergangsabschnitte 17 und Seitenrippen 18 mit dem oberhalb des Mittenbandes 3 umlaufenden Seitenbänder 4 bei der Gutübergabe zusammenwirken. So wird Erntegut, insbesondere herausgelöstes Korn, welches im Überlappungsbereich der Seitenbänder 4 mit dem Mittenband 3 auf dieses gelangt und sich dabei aufgrund einer seitlichen Neigung des Bandschneidwerkes 1 tendenziell stärker in seitlicher Richtung bewegt, von den Übergangsabschnitten 17 und Seitenrippen 18 aufgehalten.

Die bevorzugt um 45° geneigten Übergangsabschnitte 17 lenken das Erntegut, insbesondere herausgelöstes Korn, aus den von den Seitenbändern 4 überlappten Bereichen des Mittenbands 3 in Richtung der parallel zur Förderrichtung FR verlaufenden Förderrippen 14. Zudem wird die Gutführung bei der Abgabe an die hinter der Einzugswalze 10 befindliche Öffnung 12 im Mittensegment 3 verbessert. Das Mittenband 3, das überlappende Seitenband 4 und der die Öffnung 12 begrenzende Teil des Rahmens 2 bilden hintere Eckbereiche 25 aus, in denen es zwischen dem Mittenband 3 und dem Seitenband 4 zu ungewollten Gutanhäufungen kommen kann. Das Aufstauen von Erntegut in diesen hinteren Eckbereichen 25 wird durch die durch Pfeile 26 veranschaulichte Umlenkung des Ernteguts mittels der geneigten Übergangsabschnitte 17 zumindest reduziert.

Die vorstehend beschriebene erfindungsgemäße Ausgestaltung des Mittenbandes 3 ist sowohl zum Einsatz an Bandschneidwerken 1 mit starrem oder flexiblem Messerbalken 6 vorgesehen und in vorteilhafter Weise von diesen Bandschneidwerken 1 nutzbar.

### Bezugszeichenliste

- 1: Bandschneidwerk
- 2: Rahmen
- 3: Mittensegment
- 4: Seitensegment
- 5: Fördervorrichtung
- 6: Messerbalken
- 7: Seitenband
- 8: Mittenband
- 9: Einzugsvorrichtung
- 10: Einzugswalze
- 11: Einzugskanal
- 12: Öffnung
- 13: Übergangsbereich
- 14: Förderrippe
- 15: Leitblech
- 16: Förderrippe
- 17: Übergangsabschnitt
- 18: Seitenrippe
- 19: Rand
- 20: Winkel
- 21: Abschnitt
- 22: Mittenabschnitt
- 23: Abstand
- 24: Pfeil
- 25: Eckbereich
- 26: Pfeil
- FR: Förderrichtung

## Patentansprüche

1. Bandschneidwerk (1), umfassend:
- einen Rahmen (2) mit einem zumindest ein endlos umlaufendes Mittenband (8) aufweisendes Mittensegment (3) und zwei jeweils zumindest ein lateral förderndes, endlos umlaufendes Seitenband (7) aufweisenden Seitensegmenten (4), wobei das Mittenband (8) sowie die Seitenbänder (7) auf ihrer gutfördernden Bandoberseite jeweils mit äquidistant angeordneten Förderrippen (14; 16) versehen sind, welche senkrecht zur jeweiligen Förderrichtung (FR) von Mittenband (8) bzw. Seitenbändern (7) angeordnet sind, sowie einen sich im Wesentlichen über die Breite des Bandschneidwerkes (1) erstreckenden Messerbalken (6),
**dadurch gekennzeichnet,**
**dass** jede Förderrippe (14) des Mittenbandes (8) jeweils mit parallel zu äußeren Rändern (19) des Mittenbandes (8) verlaufenden Seitenrippen (18) ausgeführt ist, die durch einen geneigten Übergangsabschnitt (17) unmittelbar an ein äußeres Ende der jeweiligen Förderrippe (14) angebunden sind, wobei sich die Seitenrippen (18) jeweils abschnittsweise in Förderrichtung (FR) des Mittenbandes (8) erstrecken.

2. Bandschneidwerk (1) nach Anspruch 1, **dadurch gekennzeichnet, dass** die Seitenrippen (18) unmittelbar benachbart zu den äußeren Rändern (19) des Mittenbandes (8), zu denen die Seitenrippen (19) parallel verlaufen, angeordnet sind.

3. Bandschneidwerk (1) nach Anspruch 1 oder 2, **dadurch gekennzeichnet, dass** der jeweilige Übergangsabschnitt (17) zwischen der Förderrippe (14) und den Seitenrippen (18) unter einem Winkel (20) im Bereich von 40° bis 50°, bevorzugt unter einem Winkel (20) von im Wesentlichen 45°, geneigt ist.

4. Bandschneidwerk (1) nach einem der Ansprüche 1 bis 3, **dadurch gekennzeichnet, dass** der jeweilige Übergangsabschnitt (17) an seinen der Förderrippe (14) und der jeweiligen Seitenrippe (18) zugewandten Enden einen bogenförmigen Abschnitt (21) aufweist, der in einen gerade verlaufenden Mittenabschnitt (22) übergeht.

5. Bandschneidwerk (1) nach Anspruch 4, **dadurch gekennzeichnet, dass** der gerade verlaufende Mittenabschnitt (22) eine Länge aufweist, die mindestens 40 % eines zwischen der Förderrippe (14) und der jeweiliger Seitenrippe (18) durch den jeweiligen Ubergangsabschnitt (17) zu überbrückenden Abstands entspricht.

6. Bandschneidwerk (1) nach einem der Ansprüche 1 bis 5, **dadurch gekennzeichnet, dass** der jeweilige Übergangsabschnitt (17) und die jeweilige Seitenrippe (18) aus einem gummielastischen Material bestehen.

7. Bandschneidwerk (1) nach einem der Ansprüche 1 bis 6, **dadurch gekennzeichnet, dass**, ausgehend von der gutfördernden Bandoberseite, die vertikale Erstreckung des jeweiligen Übergangsabschnitts (17) und der jeweiligen Seitenrippe (18) geringer als die der Förderrippe (14) ist.

8. Bandschneidwerk (1) nach einem der Ansprüche 1 bis 7, **dadurch gekennzeichnet, dass** der jeweilige Übergangsabschnitt (17) und die jeweilige Seitenrippe (18) einen im Wesentlichen quaderförmigen oder trapezförmigen Querschnitt aufweisen.

9. Bandschneidwerk (1) nach einem der Ansprüche 1 bis 8, **dadurch gekennzeichnet, dass** der jeweilige Übergangsabschnitt (17) einstückig ausgeführt oder mehrteilig ausgeführt ist.

10. Bandschneidwerk (1) nach einem der Ansprüche 1 bis 9, **dadurch gekennzeichnet, dass** der Messerbalken (6) starr oder flexibel ausgeführt ist.

## Claims

1. A draper cutting unit (1), comprising:
- a frame (2) with a centre segment (3) having at least one continuously revolving centre belt (8) and two side segments (4) respectively having at least one laterally conveying continuously revolving side belt (7), wherein the centre belt (8) as well as the side belts (7) are respectively provided on their material-conveying upper belt face with equidistantly disposed conveying ribs (14; 16) which are disposed perpendicular to the respective conveying direction (FR) of the centre belt (8) or the side belts (7), as well as a cutter bar (6) which extends substantially over the width of the draper cutting unit (1),
**characterized in that**
each conveying rib (14) of the centre belt (8) is respectively constructed with side ribs (18) which extend parallel to the outer edges (19) of the centre belt (8) and which are directly connected to an outer end of the respective conveying rib (14) by an inclined transition section (17), wherein the side ribs (18) respectively extend in sections in the conveying direction (FR) of the centre belt (8).

2. The draper cutting unit (1) according to claim 1, **characterized in that** the side ribs (18) are disposed directly adjacent to the outer edges (19) of the centre belt (8) to which the side ribs (19) extend in a parallel manner.

3. The draper cutting unit (1) according to claim 1 or claim 2, **characterized in that** the respective transition section (17) between the conveying rib (14) and the side ribs (18) is inclined at an angle (20) in the range of 40° to 50°, preferably at an angle (20) of substantially 45°.

4. The draper cutting unit (1) according to one of claims 1 to 3, **characterized in that** the respective transition section (17) has an arcuate section (21) at its ends facing the conveying rib (14) and the respective side rib (18) which merges into a straight central section (22).

5. The draper cutting unit (1) according to claim 4, **characterized in that** the straight central section (22) has a length which corresponds to at least 40% of a distance between the conveying rib (14) and the respective side rib (18) to be bridged by the respective transition section (17).

6. The draper cutting unit (1) according to one of claims 1 to 5, **characterized in that** the respective transition section (17) and the respective side rib (18) consist of a rubberized elastic material.

7. The draper cutting unit (1) according to one of claims 1 to 6, **characterized in that**, starting from the material-conveying upper belt face, the vertical extent of the respective transition section (17) and of the respective side rib (18) is smaller than that of the conveying rib (14).

8. The draper cutting unit (1) according to one of claims 1 to 7, **characterized in that** the respective transition section (17) and the respective side rib (18) have a substantially rectangular or trapezoidal cross section.

9. The draper cutting unit (1) according to one of claims 1 to 8, **characterized in that** the respective transition section (17) is constructed in one piece or is constructed in multiple pieces.

10. The draper cutting unit (1) according to one of claims 1 to 9, **characterized in that** the cutter bar (6) is rigid or flexible in construction.

## Revendications

1. Barre de coupe à tapis (1), comprenant :
- un châssis (2) comportant un segment central (3), présentant au moins un convoyeur central (8) circulant sans fin et deux segments latéraux (4) présentant chacun au moins un convoyeur latéral (7) circulant sans fin, effectuant un convoyage latéral, le convoyeur central (8) ainsi que les convoyeurs latéraux (7) étant pourvus, sur leur face supérieure de convoyeur transportant les produits, respectivement de nervures de convoyage (14 ; 16) qui sont disposées de manière équidistante et perpendiculairement à la direction de convoyage (FR) respective du convoyeur central (8) et des convoyeurs latéraux (7), ainsi qu'une barre porte-lames (6) s'étendant sensiblement sur la largeur de la barre de coupe à tapis (1),
**caractérisée en ce que**
chaque nervure de convoyage (14) du convoyeur central (8) est réalisée avec des nervures latérales (18) qui s'étendent parallèlement à des bords extérieurs (19) du convoyeur central (8) et sont reliées directement à une extrémité extérieure de la nervure de convoyage (14) respective par une partie de transition (17) inclinée, les nervures latérales (18) s'étendant respectivement par portions dans la direction de convoyage (FR) du convoyeur central (8).

2. Barre de coupe à tapis (1) selon la revendication 1, **caractérisée en ce que** les nervures latérales (18) sont disposées de manière directement adjacente aux bords extérieurs (19) du convoyeur central (8), par rapport auxquels les nervures latérales (19) s'étendent de façon parallèle.

3. Barre de coupe à tapis (1) selon la revendication 1 ou 2, **caractérisée en ce que** la partie de transition (17) respective entre la nervure de convoyage (14) et les nervures latérales (18) est inclinée sous un angle (20) compris dans la plage allant de 40° à 50°, de préférence sous un angle (20) qui est sensiblement de 45°.

4. Barre de coupe à tapis (1) selon une des revendications 1 à 3, **caractérisée en ce que**, à ses extrémités tournées vers la nervure de convoyage (14) et la nervure latérale (18) respective, la partie de transition (17) respective présente une portion (21) en forme d'arc qui se raccorde à une portion médiane (22) s'étendant de façon rectiligne.

5. Barre de coupe à tapis (1) selon la revendication 4, **caractérisée en ce que** la portion médiane (22) rectiligne présente une longueur qui correspond à au moins 40 % d'une distance devant être couverte par la partie de transition (17) respective entre la nervure de convoyage (14) et la nervure latérale (18) respective.

6. Barre de coupe à tapis (1) selon une des revendications 1 à 5, **caractérisée en ce que** la partie de transition (17) respective et la nervure latérale (18) respective sont constituées d'un matériau ayant l'élasticité du caoutchouc.

7. Barre de coupe à tapis (1) selon une des revendications 1 à 6, **caractérisée en ce que**, partant de la face supérieure de convoyeur transportant les produits, la dimension verticale de la partie de transition (17) respective et de la nervure latérale (18) respective est plus faible que celle de la nervure de convoyage (14).

8. Barre de coupe à tapis (1) selon une des revendications 1 à 7, **caractérisée en ce que** la partie de transition (17) respective et la nervure latérale (18) respective présentent une section transversale sensiblement parallélépipédique ou trapézoïdale.

9. Barre de coupe à tapis (1) selon une des revendications 1 à 8, **caractérisée en ce que** la partie de transition (17) respective est réalisée d'une seule pièce ou en plusieurs parties.

10. Barre de coupe à tapis (1) selon une des revendications 1 à 9, **caractérisée en ce que** la barre porte-lames (6) est réalisée de manière rigide ou souple.
